(19) Europäisches Patentamt

European Patent Office

Office européen des brevets

(11) Veröffentlichungsnummer: **0 483 562 A1**

## (12) EUROPÄISCHE PATENTANMELDUNG

(21) Anmeldenummer: **91117226.0**

(22) Anmeldetag: **09.10.91**

(51) Int. Cl.⁵: **B29C 47/88**

(30) Priorität: **27.10.90 DE 4034234**

(43) Veröffentlichungstag der Anmeldung:
**06.05.92 Patentblatt 92/19**

(84) Benannte Vertragsstaaten:
**AT DE FR IT**

(71) Anmelder: **Linde Aktiengesellschaft**
**Abraham-Lincoln-Strasse 21**
**W-6200 Wiesbaden(DE)**

(72) Erfinder: **Veranneman, Georg, Dipl.-Ing.**
**Flurstrasse 12**
**W-8023 Pullach(DE)**
Erfinder: **Rebhan, Dieter, Ing. grad.**
**Pfaffenriedstrasse 16**
**W-8192 Geretsried-Gelting(DE)**

(74) Vertreter: **Schaefer, Gerhard, Dr.**
**Linde Aktiengesellschaft Zentrale**
**Patentabteilung**
**W-8023 Höllriegelskreuth(DE)**

(54) **Verfahren zur Herstellung von Schlauchfolien.**

㉗ Das Verfahren betrifft die Herstellung von Schlauchfolien, bei der die durch eine ringförmige Düse extrudierte, geschmolzene Kunststoffmasse mittels eines Blasmediums zu einem Schlauch geformt wird, wobei der Schlauch durch das Blasmedium gekühlt wird. Um eine intensive Abkühlung der Schlauchfolie bei definierten Temperatur- und Druckverhältnissen im Inneren der Schlauchfolie zu erzielen, wird das Blasmedium vor seinem Eintritt in den Schlauch durch Wärmetausch mit einem Kältemittel abgekühlt.

Die Erfindung betrifft ein Verfahren zur Herstellung von Schlauchfolien, bei dem die durch eine ringförmige Düse extrudierte, geschmolzene Kunststoffmasse mittels eines Blasmediums zu einem Schlauch geformt wird, wobei der Schlauch durch das Blasmedium gekühlt wird.

Bei einem bekannten Verfahren zur Herstellung von Schlauchfolien mit direkter Innenkühlung des Folienschlauchs wird in dessen Inneres flüssiger Stickstoff eingedüst, der dort verdampft. Der Folienschlauch wird dadurch aufgeblasen und gleichzeitig stark gekühlt. Zusätzlich wird die überschüssige Menge verdampften Stickstoffs am Schlauchende abgepumpt und anschließend zur Außenkühlung des Folienschlauchs verwendet. Die örtliche und zeitliche Verteilung der Abkühlung des warmen, plastischen Folienschlauchs bestimmen dessen Durchmesser und die Dicke und Homogenität des Folienmaterials (DE-OS 24 24 095).

Dieses Verfahren hat aber den Nachteil, daß eine unterschiedlich schnelle Verdampfung des Stickstoffs im Inneren des Folienschlauchs zu unkontrollierbaren Dichteschwankungen des Blasmediums führt. Letztere haben eine ungleichmäßige Druck- und Temperaturverteilung im Inneren des Folienschlauchs zur Folge, wodurch Dicke, Homogenität und Durchmesser des Folienschlauchs in nicht kontrollierbarer Weise Schwankungen unterworfen sind. Zudem erfolgt die Außenkühlung des Folienschlauchs mit dem überschüssigen, bereits erwärmten Stickstoff aus dem Inneren des Folienschlauchs und somit mit einer anderen Temperatur als die der Innenkühlung. Dies kann ebenfalls die Homogenität des Folienmaterials beeinträchtigen.

Ein weiterer Nachteil besteht darin, daß beim Auftreffen einzelner, nicht verdampfter Stickstofftropfen auf die Innenwand des Folienschlauchs die Gefahr von Materialbeschädigungen durch lokale Kälteschocks besteht.

Der Erfindung liegt daher die Aufgabe zugrunde, ein verbessertes Verfahren zur Herstellung von Schlauchfolien mit einer Kühlung des Folienmaterials zu entwickeln, das bei geringem apparativen Aufwand eine gleichmäßige und intensive Abkühlung der Folienschläuche bewirkt.

Diese Aufgabe wird erfindungsgemäß dadurch gelöst, daß das Blasmedium vor seinem Eintritt in den Folienschlauch durch Wärmetausch mit einem Kältemittel abgekühlt wird.

Das erfindungsgemäße Verfahren sorgt für eine rasche und gleichmäßige Abkühlung des Folienmaterials. Dadurch wird große Homogenität, konstante Dicke und gleichbleibender Durchmesser des Folienschlauchs sichergestellt, die Herstellungsgeschwindigkeit (Abzugsgeschwindigkeit der Schlauchfolie) erhöht und die räumlichen Dimensionen der Schlauchfolie und somit auch die der zur Herstellung benötigten Anlage verringert.

Es ist weiterhin von Vorteil, wenn der Schlauch zusätzlich von außen mit einem Kühlmedium gekühlt wird. Die Außenkühlung sorgt in Kombination mit der Innenkühlung für eine Erhöhung der Geschwindigkeit und der Gleichmäßigkeit der Abkühlung.

Bei einer weiteren vorteilhaften Ausführung des Verfahrens wird das zur Außenkühlung dienende Medium von einer den Schlauch ringförmig umgebenden, in Richtung der Schlauchachse verschiebbaren und mit einem oder mehreren Ausströmern versehenen Vorrichtung abgegeben. Damit wird sichergestellt, daß die Abkühlung über den gesamten Schlauchumfang homogen erfolgt und durch Verschieben der Vorrichtung eine Optimierung vorgenommen werden kann.

Das erfindungsgemäße Verfahren erweist sich im weiteren dann besonders vorteilhaft, wenn als Blasmedium zur Innenkühlung und als Kühlmedium zur Außenkühlung Luft verwendet wird, die ihrerseits durch Wärmetausch mit flüssigem Stickstoff als Kältemittel abgekühlt wird.

Die Abkühlung des Blas- und/oder Kühlmediums kann vorteilhaft mittels Einspritzen von flüssigem Stickstoff in die Zuführungsleitungen erfolgen, wobei die Einspritzmenge die Temperatur des Blas- und/oder Kühlmediums bestimmt.

Erfindungsgemäß ist es auch möglich, die Temperatur des Blas- und/oder Kühlmediums durch indirekten Wärmeaustausch mit einem Reservoir flüssigen Stickstoffs regelbar einzustellen. Dadurch wird insbesondere eine Durchmischung dieser Medien mit Stickstoff verhindert, falls spezielle Gaszusammensetzungen als Blas- und/oder Kühlmedien erwünscht sind.

Die Temperatur des Blasmediums kann somit vor seinem Eintritt in den Folienschlauch regelbar eingestellt werden. Anschließend wird es mit einem bestimmten Druck in den Folienschlauch eingedüst. Temperatur- und Druckregelung des Blasmediums können infolgedessen, unabhängig von den Umgebungsschwankungen, konstante Temperatur- und Druckverhältnisse im Inneren des Folienschlauchs herstellen.

Es ist weiterhin von Vorteil, wenn das Blas- und/oder Kühlmedium vor Eintritt in den Folienschlauch getrocknet wird, um den Ausfall von Schnee oder Kondenswasser im Inneren des Schlauchs zu verhindern.

In einer weiteren vorteilhaften Ausgestaltung des erfindungsgemäßen Verfahrens wird der Schlauch von einer Verkleidung umgeben, wodurch das zur Außenkühlung dienende Medium zwischen Schlauch und Verkleidung entlanggeführt wird. Damit wird die Homogenität und Effektivität der Außenkühlung gesteigert.

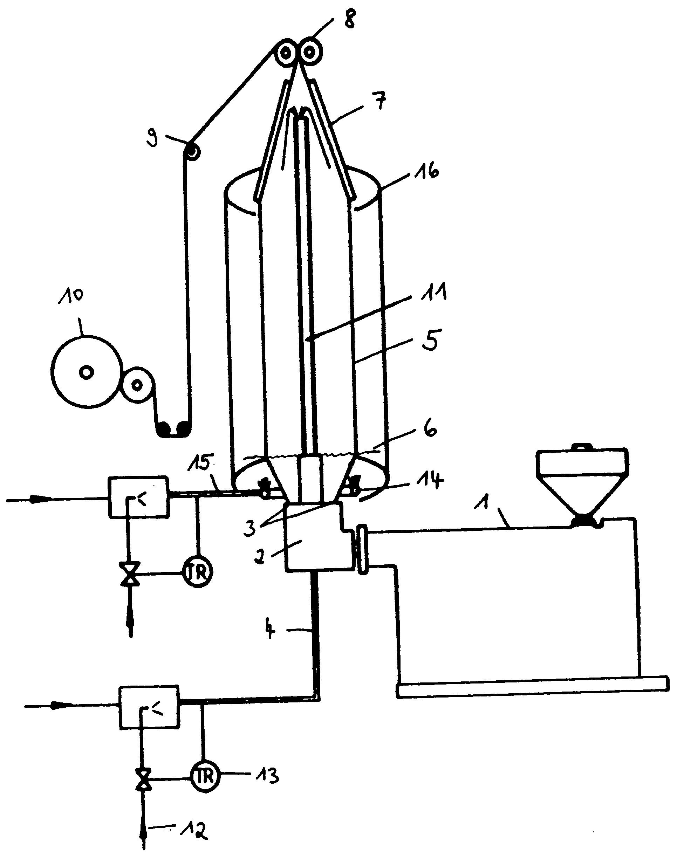

In der Figur ist schematisch der Aufbau einer Anlage zur Durchführung des erfindungsgemäßen Verfahrens zur Herstellung von Schlauchfolien dargestellt.

In einem herkömmlichen Extruder 1 wird eine geeignete Kunststoffmasse durch Erhitzen plastifiziert und durch eine ringförmige Düse 3 gepreßt. Durch Zuführen eines Blasmediums über Leitung 4 in den Blaskopf 2 der Anlage wird der aus der Düse austretende Schlauch aufgeweitet. Die Schlauchfolie 5 dehnt sich durch den Druck des Blasmediums aus, bis eine Abkühlung an der sogenannten Frostlinie 6 eintritt. Die abgekühlte zylindrische Schlauchfolie 5 wird mittels Leitbleche 7 flach gelegt und über Abquetsch- 8 und Umlenkwalzen 9 einer Aufwickelanlage 10 zugeführt. Das verbrauchte, überflüssige Blasmedium wird im oberen Teil der Schlauchfolie 5 durch ein Rohr 11 abgesaugt und an die Umgebung abgeführt.

Erfindungsgemäß wird den Blasmedium Luft vor Eintritt in die Schlauchfolie 5 durch Einspritzen des Kältemittels Stickstoff 12 auf eine gewünschte Temperatur abgekühlt. Dabei kann ein Temperaturbereich von etwa +40 °C bis -190 °C erfaßt werden. Für die praktische Anwendung ist der Bereich von +20 °C bis -20 °C geeignet. Die zur Einstellung der Temperatur nötige Menge an Kältemittel kann über einen Temperaturregler TR 13 bestimmt werden. Der Temperaturregler 13 kann im Rahmen der Erfindung auch mit dem Schlauchinneren verbunden sein, um die dort herrschende Temperatur auf einen gewünschten Wert zu regeln.

Erfindungsgemäß ist auch ein Druckregler vorgesehen, der für einen im Schlauchinneren herrschenden konstanten Druck sorgt. Es ist nämlich zu beachten, daß Temperatur- und Druckänderungen der Umgebung während der Schlauchfolienherstellung diese ungünstig beeinflussen und deshalb ausgeglichen werden müssen.

Zur zusätzlichen Abkühlung der Schlauchfolie 5 dient erfindungsgemäß ein die Schlauchfolie 5 umgebender Kühlring 14 mit mehreren Ausströmern. Das Kühlmedium wird über Leitung 15 zugeführt und seinerseits in der gleichen beschriebenen Weise wie das Blasmedium auf eine gewünschte Temperatur abgekühlt. Eine, die Schlauchfolie 5 umgebende Verkleidung 16 sorgt für gleichmäßiges Aufsteigen des Kühlmediums entlang der Schlauchfolie 5.

Der Einsatz des erfindungsgemäßen Verfahrens ist bei jeder üblichen Blasfolienanlage nach entsprechender Umrüstung möglich. Die intensive und gleichmäßige Kühlung der Schlauchfolie erhöht die Produktionsgeschwindigkeit und Folienqualität.

**Patentansprüche**

1. Verfahren zur Herstellung von Schlauchfolien, bei dem die durch eine ringförmige Düse extrudierte, geschmolzene Kunststoffmasse mittels eines Blasmediums zu einem Schlauch geformt wird, wobei der Schlauch durch das Blasmedium gekühlt wird, dadurch gekennzeichnet, daß das Blasmedium vor seinem Eintritt in den Schlauch (5) durch Wärmetausch mit einem Kältemittel abgekühlt wird.

2. Verfahren nach Anspruch 1, dadurch gekennzeichnet, daß der Schlauch zusätzlich von außen durch ein Kühlmedium gekühlt wird, das seinerseits durch Wärmetausch mit einem Kältemittel abgekühlt wird.

3. Verfahren nach Anspruch 2, dadurch gekennzeichnet, daß das Kühlmedium von einer den Schlauch (5) ringförmig umgebenden, in Richtung der Schlauchachse verschiebbaren und mit einem oder mehreren Ausströmern versehenen Vorrichtung (14) abgegeben wird.

4. Verfahren nach einem der Ansprüche 1 bis 3, dadurch gekennzeichnet, daß als Blas- und/oder Kühlmedium Luft und als Kältemittel flüssiger Stickstoff verwendet werden.

5. Verfahren nach Anspruch 4, dadurch gekennzeichnet, daß das Blas- und/oder Kühlmedium durch Einspritzen von flüssigem Stickstoff in die Zuführungsleitungen (4, 15) für das Blas- und/oder Kühlmedium abgekühlt wird, wobei die Temperatur des Blas- und/oder Kühlmediums durch die Einspritzmenge geregelt wird.

6. Verfahren nach Anspruch 4, dadurch gekennzeichnet, daß das Blas- und/oder Kühlmedium durch indirekten Wärmeaustausch mit einem Reservoir flüssigen Stickstoffs regelbar abgekühlt wird.

7. Verfahren nach den Ansprüchen 1 bis 6, dadurch gekennzeichnet, daß das Blas- und/oder Kühlmedium vor Eintritt in den Schlauch (5) getrocknet wird.

8. Verfahren nach einem der Ansprüche 2 bis 7, dadurch gekennzeichnet, daß das zur Außenkühlung des Schlauchs (5) dienende Kühlmedium mittels einer den Schlauch (5) umgebenden Verkleidung (16) an der Schlauchfolie (5) entlanggeführt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1 434 501 (PLASTICS KOGYO CO. LTD) | 1-3,7,8 | B29C47/88 |
| Y | * Zusammenfassung; Abbildung 2 * | 4-6 | |
| | --- | | |
| Y | FR-A-2 579 517 (L'AIR LIQUIDE) | 4-6 | |
| | * Ansprüche 1-3,7,8; Abbildungen 1,2 * | | |
| | --- | | |
| X | DE-A-2 737 037 (K. KALWAR) | 1,2 | |
| | * Ansprüche; Abbildungen * | | |
| | --- | | |
| X | US-A-2 668 323 (W. J. JOHNSON) | 1,7 | |
| | * Abbildung * | | |
| | --- | | |
| A | US-A-4 115 047 (J.J. STELMACK) | 1,4 | |
| | * Zusammenfassung; Abbildung 1 * | | |
| | --- | | |
| A | DE-A-2 041 685 (CO2 AUTOMATIC BUSE) | 1,4 | |
| | * Ansprüche * | | |
| | --- | | |
| A,D | FR-A-2 271 020 (LINDE A.G.) | 1,4 | |
| | * Ansprüche; Abbildung * | | RECHERCHIERTE SACHGEBIETE (Int. Cl.5) |
| | --- | | |
| A | DE-A-2 006 798 (REIFENHÄUSER K.G.) | 1,8 | |
| | * Abbildungen 1,4 * | | B29C |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 12 FEBRUAR 1992 | BELIBEL C. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.82 (P0403)